# DEMANDE DE BREVET EUROPEEN

(11) **EP 1 482 237 A1**
(43) Date de publication de la demande: **01.12.2004**
(21) Numéro de dépôt: 03380129.1
(22) Date de dépôt: 29.05.2003
(51) Int. Cl.: F16N 11/08

(54) **Dispositif graisseur à cartouche**

(71) Demandeur: Solgras Industrial, S.L., 30850 Totana Murcia (ES)
(72) Inventeur: Lorca, Antonio Martinez, 30850 Totana (Murcja) (ES)

(57) **Abrégé**

L'invention décrit le développement d'un dispositif graisseur perfectionné, conçu en particulier pour être installé sur des machines agricoles ou similaires, en vue de l'application de lubrifiant à partir de la graisse contenue dans une cartouche jetable dont le bouchon supérieur exerce une action de poussée sur la graisse lorsqu'il est actionné par les éléments de poussée incorporés dans la partie supérieure du dispositif graisseur, constitués en particulier par un ressort ou similaire, et dont la partie inférieure ou base incorpore des moyens de pompage de la graisse obtenue de la cartouche la contenant à travers un élément poinçonnant associé à la base elle-même du dispositif et qui se charge de perforer la cartouche lorsque cette dernière est vissée au graisseur. Les moyens de pompage sont motorisés et incluent un moteur électrique commandé à travers un interrupteur incorporé au tuyau de graissage lui-même.

## Description

### Objet de l'Invention

L'invention concerne un dispositif graisseur perfectionné qui présente des caractéristiques essentielles de nouveauté et des avantages sensibles par rapport aux moyens connus et employés aux mêmes fins dans l'état actuel de la technique.

D'une manière plus concrète, l'invention propose le développement d'un dispositif dans lequel la graisse nécessaire pour mener à bien les opérations de graissage de la machine ou du mécanisme à graisser est contenue à l'intérieur d'une cartouche qui a été conçue de manière à être jetable et remplaçable une fois son contenu épuisé, le propre bouchon supérieur de ladite cartouche constituant l'élément chargé d'agir sur la graisse intérieure en vertu de l'action de poussée exercée par la récupération d'un ressort, après libération de celui-ci, inclus dans la partie supérieure du corps du graisseur. La retenue entre la cartouche remplaçable et le dispositif graisseur peut être réalisée en recourant à des moyens conventionnels. Le pompage est assuré à l'aide d'un moteur de faible puissance, de préférence un moteur électrique ou similaire.

Le champ d'application de la présente invention est compris dans le cadre de l'industrie qui se consacre à la fabrication de dispositifs et de mécanismes auxiliaires, portables, en particulier les dispositifs auxiliaires destinés à être employés pour des machines très diverses, et plus spécialement pour les machines agricoles.

### Antécédents et Description de l'Invention

Tout le monde sait que, parmi les opérations de maintenance requises par les machines et les mécanismes en général, il est d'une importance fondamentale de doter ces équipements d'un moyen approprié de lubrification de leurs parties mobiles, afin de réduire au minimum l'effet de la friction, de manière à éviter les pannes et les usures prématurées, et à faire ainsi en sorte que leur fonctionnement soit correct. Dans ce sens, lorsqu'il s'agit de machines qui sont soumises à des conditions limites de fonctionnement, comme c'est le cas des machines agricoles, ces opérations s'avèrent plus nécessaires encore, s'il y a lieu, puisqu'elles accumulent une plus grande quantité de poussière et de salissures.

Afin de mener à bien les opérations de graissage, on a employé jusqu'à présent des dispositifs susceptibles d'être transportés à l'endroit où la machine travaille, et se composant d'une pompe à actionnement manuel ou à pédale, cette pompe étant dotée d'un récipient destiné à héberger la graisse, et d'un système de communication du fluide avec les moyens de pompage, à partir desquels il est possible d'envoyer la graisse vers les endroits de la machine où cette dernière doit être déposée. La graisse est poussée par un patin actionné par un ressort logé dans le corps du bouchon supérieur du graisseur, et l'un ou l'autre moyen d'accrochage est en outre prévu en vue de la récupération par traction manuelle de la position de ce patin lorsque la graisse est épuisée.

Cependant, même s'il s'agissait de dispositifs de conception très simple et par conséquent faciles à réaliser, ils n'étaient pas exempts d'inconvénients considérables associés aux opérations liées au remplissage du récipient avec de la nouvelle graisse. En effet, l'opération de remplacement de la graisse devait être réalisée de manière manuelle et, à cette fin, on recourait généralement à une spatule à l'aide de laquelle on prenait la graisse dans un conteneur plus grand (un bidon ou similaire) et on la déposait à l'intérieur du récipient du dispositif graisseur, de sorte que l'opération était lente, laborieuse, et provoquait en outre, parfois, la contamination de la graisse et même la formation de bulles d'air, réellement difficiles à extraire en raison de la viscosité du produit, ce qui rend l'extraction postérieure difficile.

Il existe par conséquent un besoin pratique associé aux dispositifs graisseurs de ce type et que la présente invention s'est proposée de résoudre.

Le titulaire de la présente invention lui-même avait déjà proposé un dispositif amélioré, dans le cadre de la demande de Modèle d'Utilité numéro 9902450, dont les caractéristiques constituent la partie pré-caractérisante de la revendication 1 de cette description, dans lequel les moyens conteneurs de la graisse ont été remplacés avantageusement par une cartouche au design spécifique pour cette application concrète, et dans lequel les moyens de pression sur la graisse sont assurés par l'action de poussée exercée sur le bouchon de la cartouche elle-même, grâce à la récupération élastique d'un ressort prévu à cet effet. Cependant, l'action de pompage était assurée moyennant l'actionnement d'un levier ou d'une pédale par l'usager.

L'objectif principal auquel s'oriente la présente invention consiste à fournir une solution améliorée des problèmes associés aux graisseurs actuels. Cet objectif a été pleinement atteint grâce à la réalisation d'un dispositif graisseur selon l'invention, dans lequel, à la différence du dispositif décrit et revendiqué dans ce Modèle d'Utilité antérieur, tout le mécanisme de pompage manuel à l'aide d'un levier ou d'une pédale a été remplacé par un dispositif de pompage actionné au moyen d'un moteur électrique de petite taille, réalisé de manière à pouvoir être parfaitement logé dans la base du dispositif, en demeurant par conséquent hors de la vue et de la portée d'un observateur externe. Un interrupteur approprié permettra à l'usager de connecter l'alimentation électrique de ce moteur pour mener à bien l'une ou l'autre opération de graissage. De cette manière, non seulement, on met à profit les caractéristiques avantageuses exposées dans la description du Modèle antérieur, mais en outre, on simplifie tout le fonctionnement associé à l'action de graissage, et de plus, on réduit le temps et l'effort nécessaires pour mener ces opérations à bien. Bien sûr, les possibilités de remplacement des cartouches épuisées sont maintenues, grâce à la disponibilité de ces dernières, à la portée des éventuels usagers, dans les points de vente propres à certains réseaux commerciaux et services conventionnels, tels que des magasins de pièces de rechange, des stations services ou tout autre type de commerce.

De manière connue, le dispositif graisseur comprend un corps destiné à la réception de la cartouche remplaçable et qui peut être conçu, selon un mode de réalisation, sous la forme de corps unique évidé d'une vaste zone de paroi latérale à travers laquelle sont menées à bien les opérations d'extraction de la cartouche épuisée et d'introduction de la nouvelle cartouche. Dans ce cas, la portion supérieure du corps de la cartouche inclut des moyens conventionnels de poussée, consistant en un patin actionné par un ressort qui, en position de repos de l'ensemble, est comprimé. Sur la paroi supérieure de cette portion de corps apparaît un moyen d'action manuel, par exemple un anneau ou élément similaire, uni à un câble ou à un autre moyen suffisamment résistant pour rendre le ressort à sa position comprimée. Dans la partie inférieure, le corps dispose d'une portion de base à l'intérieur de laquelle ont été logés, conformément à l'invention, les moyens de pompage actionnés, comme il a été dit, par un élément moteur consistant, de préférence, en un petit moteur électrique, enfermé à l'intérieur de la portion de base. Cette portion de base présente en outre, d'une manière connue en elle-même, un orifice à paroi latérale filetée, par le centre duquel accède un élément poinçonnant destiné à s'introduire vers l'intérieur de la cartouche lorsqu'il est vissé à la portion inférieure du corps, et à travers lequel peut s'écouler la graisse provenant de l'intérieur de la cartouche.

La réalisation décrite ci-avant pourrait être remplacée par une seconde alternative de réalisation, dans laquelle les deux portions supérieure et inférieure du dispositif graisseur peuvent être conçues sous la forme d'éléments séparés, indépendants, la portion supérieure contenant les moyens de poussée, et en disposant de même dans la portion inférieure, ou base, les moyens de pompage actionnés par un moteur, en plus d'incorporer les moyens de poinçonnage comme décrit ci-avant.

Dans les deux cas, la cartouche consiste en un corps conteneur, de préférence cylindrique, dont la base inférieure présente un orifice scellé en recourant à une technique conventionnelle quelconque, et de préférence entouré par une portion axiale saillante à surface externe filetée, dimensionnée de façon adéquate pour s'adapter à l'orifice de la portion inférieure du dispositif graisseur, à travers lequel la graisse peut s'écouler depuis l'intérieur de la cartouche. La base supérieure de la cartouche dispose d'un bouchon susceptible de se déplacer vers l'espace interne lorsqu'il est poussé par le patin associé au ressort de la portion supérieure du dispositif graisseur, afin de pousser la graisse de manière à ce que cette dernière s'écoule vers l'extérieur lorsque les moyens de pompage sont actionnés.

Comme on peut le comprendre, l'invention met à profit les caractéristiques principales de la technique connue pour ce type de dispositifs et, avec une modification simple dans la base du dispositif graisseur, facilite énormément et accélère les opérations associées au graissage d'une machine ou d'un système quelconque, grâce à l'utilisation du dispositif de l'invention.

### Brève Description des Dessins

Ces caractéristiques et d'autres, ainsi que les avantages de l'invention, seront mis en évidence avec davantage de clarté grâce à la description détaillée suivante d'un mode préféré de réalisation, exposé uniquement à titre d'exemple illustratif mais non limitatif, sur la base des dessins qui sont annexés, dans lesquels :
La Figure 1 montre une vue schématisée, en perspective, d'un ensemble composé d'un dispositif graisseur réalisé conformément à l'invention, et d'une cartouche du type de celles utilisées par le dispositif de l'invention, et
La Figure 2 représente une vue schématisée, également en perspective, du même ensemble que celui de la Figure 1, conformément à une alternative de réalisation plus simple.

### Description de la Réalisation Préférée

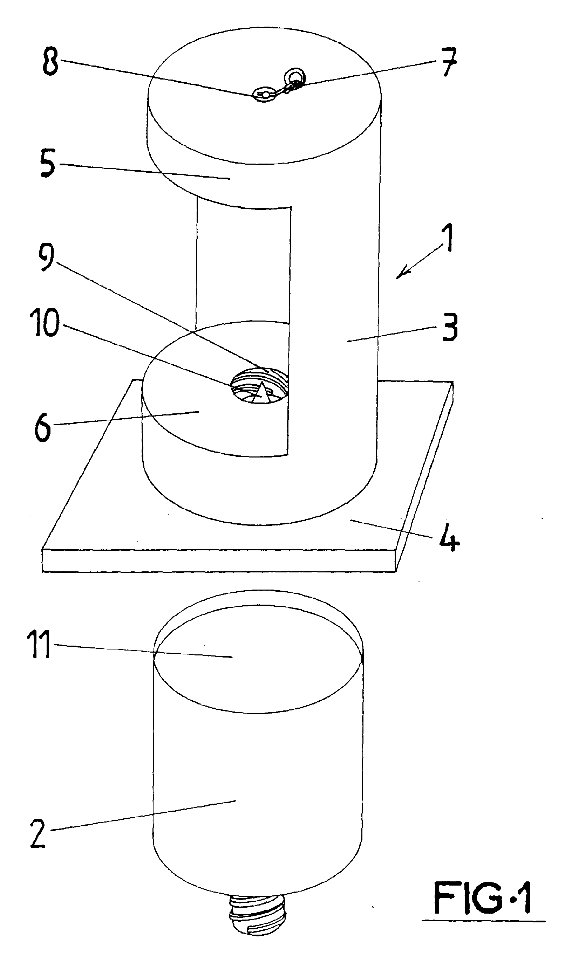

La description détaillée de la réalisation préférée de l'invention sera réalisée en s'appuyant sur les Figures des dessins annexés, dans lesquels les mêmes références numériques sont utilisées pour désigner les parties identiques ou similaires. Conformément à la représentation de la Figure 1, on peut distinguer un dispositif graisseur, repéré en général par la référence 1, ainsi que la cartouche elle-même, repérée par la référence 2, dûment préparée pour son adaptation à ce dispositif graisseur, ces deux éléments faisant partie de l'état de la technique, en raison de l'existence du Modèle d'Utilité numéro 9902450 mentionné du même titulaire. Comme représenté, le dispositif graisseur 1 se compose d'un corps 3, situé sur un élément 4 de support, en vue de son appui sur n'importe quelle surface d'appui, par exemple sur le sol, et a été doté d'une forme de préférence cylindrique, dont l'intérieur est creux, dont a été éliminée une vaste portion de la paroi latérale afin de créer une ouverture de dimensions suffisantes pour permettre d'introduire dans celui-ci la cartouche 2 en vue de sa fixation dans l'espace intérieur du corps. L'ouverture mentionnée est limitée dans ses parties supérieure et inférieure par deux portions 5, 6 de corps, dont la portion supérieure 5 renferme en son intérieur les moyens de poussée, consistant en un patin et un ressort de poussée (non représentés) qui, en position de repos de l'ensemble, se trouve comprimé, susceptibles d'être repositionnés manuellement dans cette position à l'aide d'un anneau 8 et d'un moyen d'accrochage tel qu'un câble 7 ou élément similaire (non représenté).

Pour sa part, la portion 6 inférieure ou base du corps 1 incorpore également en son intérieur des moyens conventionnels de pompage de la graisse, qui ont été motorisés de manière à pouvoir être actionnés, de préférence, électriquement, commandés de l'extérieur par l'usager. Ces moyens moteurs sont renfermés à l'intérieur de la portion 6 citée de base, cachés de la vue d'un observateur externe, avec la simplification résultante que suppose l'élimination du levier ou de la pédale externes qui caractérisent les dispositifs conventionnels. La mise en marche / arrêt de ces moyens moteurs est assurée à l'aide d'un interrupteur, situé à un emplacement commode à la portée de l'usager, de préférence sur le tuyau de graissage lui-même, et qui n'a pas été représenté pour être en lui-même d'un type conventionnel et connu. En outre, cette même portion 6 de base inclut, d'une manière également connue, l'orifice 9, déprimé vers l'intérieur, doté d'une paroi latérale filetée de la manière appropriée, au centre duquel apparaît un moyen 10 poinçonnant, et à travers lequel les moyens de pompage aspirent la graisse lorsque les moyens moteurs sont activés.

La cartouche 2 est également représentée sur la même Figure 1, et aucune description détaillée de ses caractéristiques ne sera faite puisqu'elle ne fait pas partie de l'objet de l'invention et, en outre, ces caractéristiques ont déjà été exposées de manière générale dans ce qui précède. Soulignons uniquement le fait que, pour le fonctionnement de l'ensemble, le bouchon 11 supérieur peut être déplacé, une fois libéré de sa position, grâce à la poussée exercée par le patin incorporé dans la portion 5 supérieure de corps lorsque celui-ci est propulsé par l'action du ressort associé, de sorte que le déplacement de ce bouchon Il pousse la graisse vers le bas. Ce sont ensuite les moyens de pompage, avec leur actionnement motorisé, qui se chargent de transférer la graisse jusqu'à l'emplacement de la machine qui a été sélectionné au préalable.

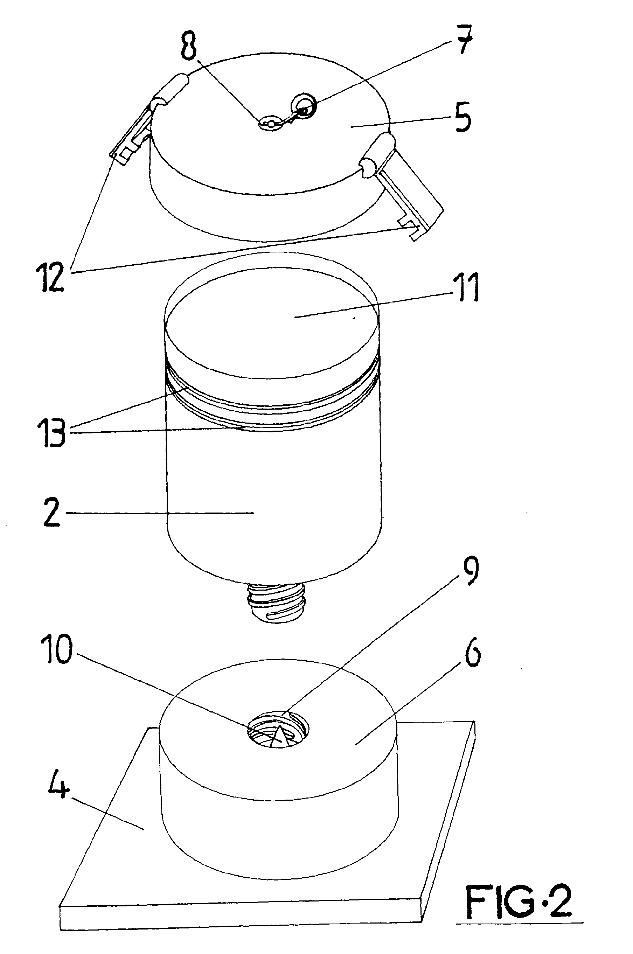

Le dispositif représenté à la Figure 2, et qui fait également partie de l'état de la technique puisqu'il est contenu dans la demande antérieure, incorpore de même l'avantage offert par la modification exprimée, puisque, dans ce cas également, il est possible d'éliminer le levier ou la pédale externe, et de remplacer cet élément par un moyen moteur logé à l'intérieur de la base 6. Les autres caractéristiques sont identiques à celles qui ont déjà été décrites tant dans la demande antérieure qu'en ce qui concerne la Figure 1. Cependant, il convient de souligner le fait que, dans le cas de cette alternative, le corps 1 a été remplacé par les portions 5 et 6 séparées, la première étant dotée de moyens d'accrochage 12, en vue de sa fixation et de son amarrage aux cannelures réalisées dans le corps de la cartouche 2.

Il n'est pas considéré nécessaire de détailler davantage le contenu de cette description pour qu'un expert en la matière puisse comprendre sa portée et les avantages dérivés de l'invention, ainsi que développer et mettre en pratique l'objet de cette dernière.

Cependant, il doit être entendu que l'invention a été décrite suivant une réalisation préférée de cette dernière, ce pourquoi elle est susceptible de recevoir des modifications sans que cette circonstance ne suppose aucune altération du fondement de ladite invention, de telles modifications pouvant affecter la forme, les dimensions et/ou les matériaux de fabrication de l'ensemble ou de ses parties.

## Revendications

1. Dispositif graisseur perfectionné, consistant en une portion (5) supérieure qui loge en son intérieur des moyens de poussée constitués par un ressort et un patin correspondant, et une portion (6) inférieure ou de base, à l'intérieur de laquelle sont logés des éléments de pompage de la graisse reçue en provenance d'une cartouche (2) contenant cette dernière, les deux portions (5, 6) étant reliées au moyen d'un corps (1) ou susceptibles de s'accoupler directement à cette cartouche (2), le corps (1) étant le cas échéant pourvu d'une vaste ouverture permettant l'introduction de la cartouche (2), cette dernière présentant un bouchon supérieur déplaçable moyennant l'action de poussée exercée par le patin supérieur, et la cartouche (2) disposant en outre d'une sortie susceptible d'être perforée lorsque celle-ci accouple sa sortie, par vissage, à un orifice de la portion (6) de base à l'intérieur duquel a été prévue l'incorporation d'un élément (10) poinçonnant, **caractérisé en ce que** cette portion (6) ne présente aucun levier ou pédale d'actionnement externe, mais **en ce qu'**elle renferme en son intérieur des moyens motorisés susceptibles de fournir l'action motrice aux éléments de pompage de la graisse obtenue à partir de cette cartouche (2), consistant de préférence en un moteur électrique de faible puissance, susceptible d'être commandé en vue de sa mise en marche /arrêt moyennant l'actionnement d'un interrupteur approprié qui, de préférence, sera accouplé au tuyau de graissage lui-même.
